Europäisches Patentamt

European Patent Office

Office européen des brevets

(19)

(11) **EP 0 937 747 B1**

(12) **EUROPEAN PATENT SPECIFICATION**

(45) Date of publication and mention
of the grant of the patent:
**16.04.2003 Bulletin 2003/16**

(51) Int Cl.[7]: **C08L 51/04**, C08L 55/02

(21) Application number: **99301312.7**

(22) Date of filing: **23.02.1999**

(54) **Thermoplastic resin composition**

Thermoplastische Harzzusammensetzung

Composition de résine thermoplastique

(84) Designated Contracting States:
**DE GB**

(30) Priority: **24.02.1998 JP 5739998**

(43) Date of publication of application:
**25.08.1999 Bulletin 1999/34**

(73) Proprietor: **Techno Polymer Co., Ltd.**
**Tokyo (JP)**

(72) Inventors:
• **Itoh, Hiroyuki, c/o Techno Polymer Co., Ltd.**
**Tokyo (JP)**
• **Okamoto, Kazuhiro,**
**c/o Techno Polymer Co., Ltd.**
**Tokyo (JP)**
• **Kurata, Takashi, c/o Techno Polymer Co., Ltd.**
**Tokyo (JP)**

(74) Representative: **Woods, Geoffrey Corlett**
**J.A. KEMP & CO.**
**Gray's Inn**
**14 South Square**
**London WC1R 5JJ (GB)**

(56) References cited:
**EP-A- 0 242 158** EP-A- 0 303 489

**Description**

The present invention relates to a thermoplastic resin composition. More particularly, it relates to a thermoplastic resin composition comprising principally a thermoplastic resin and a polyether ester amide produced by copolymerizing a specific dicarboxylic acid, and being excellent in permanent antistatic properties, impact resistance and moldability.

Thermoplastic resins obtained by blending polyether ester amides in ABS resins are known as permanent antistatic grade resins. Blending of ABS resins with polyether ester amides, however, involves the problems of poor appearance of the injection moldings, laminar exfoliation (delamination), etc., because of unsatisfactory compatibility between ABS resins and polyether ester amides.

Japanese Patent Application Laid-Open (KOKAI) No. 7-10946 discloses an antistatic thermoplastic resin composition comprising:

(A) 1 to 40 parts by weight of a polyether ester amide produced by polymerizing (a) an aminocarboxylic acid or a lactam having 6 or more carbon atoms, or a salt of a diamine having 6 or more carbon atoms and a dicarboxylic acid, (b) a polyethylene glycol having a number-average molecular weight of 200 to 6,000, and (c) a dicarboxylic acid having 4 to 20 carbon atoms, wherein the percentage of polyether ester units is 95 to 10% by weight based on the whole structural units;

(B) 99 to 2 parts by weight of a graft copolymer produced by graft polymerizing (a) 70 to 20 parts by weight of a monomer mixture comprising 40 to 90% by weight of an aromatic vinyl-based monomer and 60 to 10% by weight of a vinyl cyanide-based monomer to (b) 30 to 80 parts by weight of a rubber-like polymer; and

(C) 1 to 97 parts by weight of a copolymer produced by polymerizing a monomer mixture comprising 40 to 90% by weight of an aromatic vinyl-based monomer, 60 to 10% by weight of a vinyl cyanide-based monomer and 0 to 40% by weight of other vinyl-based monomer copolymerizable therewith, said rubber-like polymer (b) being contained in an amount of 1 to 40% by weight.

The thermoplastic resin composition of the above patent, however, has the problems in appearance of the moldings thereof and heat stability.

As a result of the present inventors' earnest studies to solve the above problems, it has been found that a thermoplastic resin composition obtained by blending, in the specific percentages, a thermoplastic resin produced by polymerizing a specific monomer with a rubber-like polymer and a polyether ester amide produced by reacting a specific polyamide with a specific polyalkylene oxide has excellent permanent antistatic properties, impact resistance and moldability as well as fine visual appearance of its moldings.

The present invention has been attained on the basis of the above finding.

An object of the present invention is to provide a thermoplastic resin composition having excellent permanent antistatic properties, impact resistance, moldability and molding appearance.

To attain the above aim, in an aspect of the present invention, there is provided a thermoplastic resin composition comprising:

(A) 60 to 99 parts by weight of a thermoplastic resin obtained by polymerizing 0 to 20 %, preferably more than 0% and not more than 20% by weight of a monomer (b) containing at least one functional group selected from the group consisting of hydroxyl group, epoxy group, amino group, carboxyl group, acid anhydride group, amide group, imide group and oxazoline group, and not less than 10% and less than 100% by weight of at least one monomer (c) selected from the group consisting of aromatic vinyl compounds, vinyl cyanide compounds, acrylic esters, methacrylic esters and maleimide-based compounds, in the presence of more than 0% and mot more than 70% by weight of a rubber-like polymer (a), the weight percentage being based on the total weight percentage of (a), (b) and (c); and

(B) 40 to 1 part by weight of a polyether ester amide obtained by reacting 10 to 90% by weight of a polyamide (d), which is capped at the end of the molecule with a dicarboxylic acid (f) having not less than 21 and less than 60 carbon atoms, with 90 to 10% by weight of polyalkylene oxide (e), the weight percentage being based on the total weight percentage of (d) and (e).

The present invention is explained in detail below.

First, the thermoplastic resin used as component (A) of the composition according to the present invention is explained.

The component (A) is a thermoplastic resin that can be obtained by polymerizing 0 to 20% by weight of a monomer (b) having at least one functional group selected from the group consisting of hydroxyl group, epoxy group, amino group, carboxyl group, acid anhydride group, amide group, imide group and oxazoline group with less than 100 and not less than 10% by weight of at least one monomer (c) selected from the group consisting of aromatic vinyl compounds, vinyl cyanide compounds, acrylic or methacrylic esters and maleimide-based compounds in the presence of more than 0 and not more than 70% by weight of a rubber-like polymer (a). The total weight percentage of (a), (b) and (c) is 100% by weight.

Examples of the rubber-like polymers (a) usable in the present invention for the above purpose include polybutadiene, butadiene-styrene copolymer, butadiene-acrylonitrile copolymer, ethylene-propylene-(non-conjugated diene) copolymer, ethylene-butene-1-(non-conjugated diene) copolymer, isobutylene-isoprene copolymer, acrylic rubber, styrene-butadiene-styrene block copolymer, styrene-isoprene-styrene block copolymer, hydrogenated diene-based block, random or homopolymers such as SEBS, polyurethane rubber and silicone rubber. Of these polymers, polybutadiene, butadiene-styrene copolymer, ethylene-propylene-(non-conjugated diene) copolymer, hydrogenated diene-based polymers and silicone rubber are preferred. In case of using silicone rubber, it is preferable to contain a graft-crossing agent (e.g. those containing vinyl groups, and γ-methacryloxypropylmethyl dimethoxysilane) in an amount of 0.01 to 10% by weight in the silicone rubber because by the presence of such a substance, a thermoplastic resin composition with excellent impact resistance which is the aim of the present invention can be obtained.

Copolymerization of a rubber-like polymer (a) in the component (A) contributes to the improvement of impact resistance. Further, when two or more graft polymers differing in rubber particle size are used, it is possible to obtain a thermoplastic resin composition of the present invention with even higher impact strength and a better balance of properties. It is preferred that two kinds of polymer (a) differing in particle size, that is, one of them being around 80 to 180 nm and the other being around 180 to 480 nm in diameter, are used. In this case, it is possible to polymerize the subcomponent (b) and/or the subcomponent (c) of the component (A) in the presence of two types of rubber-like polymer (a), or to use two types of component (A) differing in rubber particle size.

The subcomponent (b) is a monomer containing at least one functional group selected from the group consisting of hydroxyl group, epoxy group, amino group, carboxyl group, acid anhydride group, amide group, imide group and oxazoline group.

Exemplary of the monomers having a hydroxyl group are 2-hydroxyethyl methacrylate, 2-hydroxyethyl acrylate, 3-hydroxy-1-propene, 4-hydroxy-1-butene, and 3-hydroxy-2-methyl-1-propene. The monomers having an epoxy group include glycidyl methacrylate and glycidyl acrylate, and the monomers having an amino group include aminostyrene, acrylamine, aminopropylmethacrylate and aminoethyl methacrylate. The monomers having a carboxyl group include acrylic acid, methacrylic acid, itaconic acid and maleic acid. A typical example of the monomers having an acid anhydride group is maleic anhydride, a typical example of the monomers having an amide group is acrylamide, a typical example of the monomers having an imide group is N-phenylmaleimide and a typical example of the monomers having an oxazoline group is vinyloxazoline.

Of these monomers, glycidyl methacrylate, aminoethylmethacrylate, 2-hydroxyethyl methacrylate, maleic anhydride, acrylamide N-phenylmaleimide and vinyloxazoline are preferred.

Copolymerization of these functional group-containing monomers into the component (A) enhances interfacial adhesion (compatibility) with the component (B) or other thermoplastic resins.

These monomers (b) may be used either singly or by mixing two or more of them.

The subcomponent (c) is at least one monomer selected from the group consisting of aromatic vinyl compounds, vinylcyanide compounds, acrylic or methacrylic esters and maleimide- based compounds.

Examples of the aromatic vinyl compounds include styrene, α-methylstyrene, o-methylstyrene, p-methylstyrene, vinyltoluene, methyl-α-methylstyrene, brominated styrene and chlorinated styrene. Of these compounds, styrene, α-methylstyrene and p-methylstyrene are preferred.

Examples of the vinyl cyanide compounds include acrylonitrile and methacrylonitrile, the former being preferred.

Examples of the acrylic or methacrylic esters include methyl acrylate, ethyl acrylate, butyl acrylate, methyl methacrylate, ethyl methacrylate and butyl methacrylate, of which butyl acrylate and butyl methacrylate are preferred.

Examples of the maleimide-based compounds include, beside maleimide itself, N-methylmaleimide, N-phenylmaleimide, N-(2-methylphenyl)maleimide, N-(4-hydroxyphenyl)maleimide and N-cyclohexylmaleimide. N-phenylmaleimide is preferred. It is remarkable that when a maleimide-based monomer is copolymerized in an amount of 20 to 80% by weight with the monomer (b), the produced thermoplastic resin composition is improved in heat resistance.

These monomers (c) may be used either singly or as a mixture of two or more of them.

The weight percentages of the subcomponents (a), (b) and (c) are as follows. The percentage of the rubber-like polymer (a) is more than 0 and not more than 70% by weight, preferably 1 to 70% by weight, more preferably 10 to 60% by weight, even more preferably 30 to 60% by weight, especially preferably 35 to 60% by weight. The percentage of the monomer (b) is usually 0 to 20% by weight, preferably more than 0% and not more than 20% by weight, more preferably 1 to 20% by weight, still more preferably 1 to 15% by weight, especially preferably 5 to 10% by weight. The percentage of the monomeric material (c) is not less than 10 and less than 100% by weight, preferably 10 to 98% by weight, more preferably 20 to 80% by weight, even more preferably 25 to 69% by weight, especially preferably 30 to 60% by weight. In all cases, the total percentage of (a), (b) and (c) is 100% by weight. If the subcomponent (a) exceeds 70% by weight or the subcomponent (b) exceeds 20% by weight or the subcomponent (c) is less than 10% by weight, there may arise such problems as poor moldability and bad appearance of the moldings.

The graft percentage of the thus obtained thermoplastic resin (A), when using a rubber-like polymer (a), is preferably 10 to 150% by weight, more preferably 30 to 130% by weight, especially preferably 40 to 120% by weight. If the graft percentage of (A) is less than 10% by weight, the produced resin composition may be adversely affected in impact strength and molding appearance. On the other hand, if the graft percentage exceeds 150% by weight, the composition may be deteriorated in moldability.

The amount of the insoluble matter (y) used for calculating the above graft percentage is determined in the following way. 1 g of the component (A) is put into methyl ethylketone and shaken by a shaker for 2 hours to dissolve the free copolymer. The resulting solution is centrifuged at 23,000 rpm for 30 minutes and the separated insoluble matter is dried by a vacuum dryer at 120°C for one hour to obtain the dry insoluble matter (y).

When the rubber moiety in 1 g of the component (A) is expressed by (x) and the content of the methyl ethyl ketone insoluble matter in 1 g of the component (A) is expressed by (y), the graft percentage is given by the following equation:

$$\text{Graft percentage (\%)} = \{(y - x)/x\} \times 100$$

The intrinsic viscosity $[\eta]$ of the matrix resin of the component (A) (measured in methyl ethyl ketone at 30°C) is preferably 0.1 to 1.5 dl/g, more preferably 0.3 to 1.0 dl/g. When the intrinsic viscosity is within the range defined in the present invention, there can be obtained the resin composition of the present invention with excellent impact resistance and moldability (fluidity).

The thermoplastic resin (A) of the present invention can be produced by a known polymerization method such as emulsion polymerization, solution polymerization and suspension polymerization. When emulsion polymerization is used, usually the product is coagulated with a coagulant and the obtained powder is washed with water and then dried for purification. Inorganic salts such as calcium chloride, magnesium sulfate, magnesium chloride and sodium chloride can be used as coagulant.

As radical initiator for the graft polymerization, it is possible to use the ordinarily used ones, such as cumene hydroperoxide, diisopropylbenzene hydroperoxide, potassium persulfate, azobisisobutyronitrile (AIBN), benzoylperoxide, lauroyl peroxide, t-butyl peroxylaurate, t-butyl peroxymonocarbonate and the like. Of these compounds, cumene hydroperoxide, diisopropylbenzene hydroperoxide, azobisisobutyroitrile (AIBN), benzoyl peroxide and lauroyl peroxide are preferred.

The polymerization initiator may be used either singly or as a mixture of two or more of them.

The polymerization initiator may be added to the polymerization system all at a time or continuously in an amount of usually 0.01 to 10% by weight, preferably 0.05 to 3% by weight, based on the combined amount of the monomers.

Exemplary of the thermoplastic resins (A) are ABS (acrylonitrile-butadiene-styrene) resins, AES (acrylonitrile-ethylene-propylene-styrene) resins, AS (acrylonitrile-styrene) resins and polymers obtained by graft-polymerizing AS (acrylonitrile-styrene) resins to silicone rubber. ABS resins and AES resins are especially preferred.

The ABS or AES resins used in the present invention are those with a rubber content of preferably 5 to 65% by weight, more preferably 15 to 55% by weight, a graft percentage of preferably 40 to 150% by weight, more preferably 50 to 120% by weight, and a matrix resin intrinsic viscosity $[\eta]$ of preferably 0.1 to 1.0 dl/g.

The component (A) may be either a single polymer or a blend of two or more kinds of polymer. Preferred single polymers or combinations of the polymers are shown below, but these are not restrictive, and it is possible to use other combinations without departing from the scope of the present invention.

(1) ABS resin.
(2) ABS resin/AS resin. The preferable percentage is 20-80% by weight/80-20% by weight.
(3) AES resin/AS resin. The preferable percentage is 20-80% by weight/80-20% by weight.
(4) ABS resin/AS resin/compolymer of acrylonitrile-styrene-monomer (b). As the monomer (b), a monomer having hydroxy group or imide group (such as N-phenylmaleimide) is preferred and a monomer having hydroxy group such as 2-hydroxyethyl methacrylate is more preferred. The preferable percentage is 20-80% by weight/10-75% by weight/5-10% by weight.
(5) Polymers obtained by graft polymerizing AS resin to silicone rubber.
(6) Modified ABS resin obtained by copolymerizing methyl methacrylate to ABS.

In the AS resins used in the above, the amount of acrylonitrile to be polymerized is preferably 10 to 45% by weight, more preferably 15 to 35% by weight, still more preferably 20 to 32% by weight, and their intrinsic viscosity [η] is preferably 0.1 to 1.2 dl/g, more preferably 0.2 to 0.8 dl/g.

Now, the polyether ester amides used as component (B) in the composition of the present invention are explained.

The component (B) is a multi-block type polyether ester amide obtained by reacting 10 to 90% by weight, preferably 30 to 70% by weight, more preferably 40 to 60% by weight of a polyamide (d), which is capped at the end of the molecule with a dicarboxylic acid (f) having not less than 21 and less than 60 carbon atoms, with 90 to 10% by weight, preferably 70 to 30% by weight, more preferably 60 to 40% by weight of polyalkyleneoxide (e).

If the percentage of the polyamide (d) in the component (B) exceeds 90% by weight or the content of the subcomponent(e) is less than 10% by weight, the produced thermoplastic resin composition may be unsatisfactory in electrical properties. On the other hand, if the percentage of (d) is less than 10% by weight or the content of (e) exceeds 90% by weight, the produced composition may be poor in heat stability and bad in molding appearance.

Polyamide (d) can be produced from, for example, aminocarboxylic acids or lactams having 6 or more carbon atoms, or nylon mn salts (m+n= 12 or more) . Exemplary of the hard segments comprising aminocarboxylic acids or lactams having 6 or more carbon atoms or nylon mn salts with m+n= 12 or more are aminocarboxylic acids such as ω-aminocaproic acid, ω-aminoenanthic acid, ω-aminocaprylic acid, ω-aminobergonoic acid, aminocapric acid, 11-aminoundecanoic acid and 12-aminododecanoic acid, lactams such as caprolactam and laurolactam, and nylon salts such as nylon 6,6, nylon 6,10, nylon 6,12, nylon 16, nylon 11,10, nylon 12,6, nylon 11,12, nylon 12,10, and nylon 12,12. These polyamides (d) may be used either singly or as a mixture of two or more of them.

Exemplary of the soft segments comprising polyalkyleneoxides (e) are polyethylene glycol, poly(1,2 and 1,3-propyleneoxide) glycol, poly(tetramethylene oxide) glycol, poly(hexamethyleneoxide) glycol, ethylene oxide-propylene oxide block or random copolymer, and ethylene oxide-tetrahydrofuran block or random copolymer. The polymers obtained by polymerizing dihydroxyarylene compounds in polyalkylene oxides, specifically those obtained by introducing polyethylene glycol to both ends of bisphenol A, are also usable. Synthetically, ethylene oxide may be addition polymerized to both ends of bisphenol A. Of these polyalkylene oxides, polyethylene glycol and the polymers obtained by reacting polyethylene oxides with bisphenol A are particularly preferable.

The number-average molecular weight of the soft segment is 200 to 8,000, preferably 250 to 6,000, more preferably 300 to 4,000.

The polyalkylene oxides used in the present invention may be aminated or carboxylated at both terminal positions of the molecule.

A dicarboxylic acid (f) having a specific number of carbon atoms is used for bonding the said polyamide (d) and polyalkylene oxide (e). The "specific number" of carbon atoms defined in the present invention is not less than 21 and less than 60, preferably 25 to 45, more preferably 30 to 43, especially preferably 35 to 40. When the number of the carbon atoms of (f) is within the above defined range, it is possible to obtain a thermoplastic resin composition having particularly excellent electrical properties and heat stability. As the dicarboxylic acid (f), there can be used those of aliphatic type and those containing aromatic groups.

If the carbon number of the dicarboxylic acid (f) is not more than 20, the produced thermoplastic resin composition may be unsatisfactory in molding appearance and heat stability, while if the carbon number is not less than 60, the composition may be found poor in electrical properties.

These dicarboxylic acids (f) can be used either singly or as a mixture of two or more of them.

The dicarboxylic acids having a specific number of carbon atoms can be synthesized, for instance, by dimerizing linolic acid ($C_{18}H_{32}O_2$), oleic acid ($C_{18}H_{34}O_2$) or the like. The synthesis process comprises a Diels-Alder reaction making use of two double bonds of linolic acid or the individual double bonds of oleic acid and linolic acid. These dicarboxylic acids having around 36 carbon atoms are commercially available as dimer acids.

It is also possible to use those of the synthetic dicarboxylic acids in which the unsaturated bonds have been hydrogenated. Use of a hydrogenated dimer acid makes it possible to obtain the thermoplastic resin composition of the present invention with even higher heat stability.

The specific viscosity η SP/C of the component (B) (measured in a formic acid solution at 25°C and a flow rate of 0.5 g/100 ml) is preferably 0.5 to 3. The component (B) may suffer a reduction of molecular weight due to heat deterioration caused in the production process or molding of the thermoplastic resin composition, but it is preferable that the specific viscosity η SP/C of the final product is 0.3 or more.

The percentages of the components of the thermoplastic resin composition according to the present invention are as follows. The percentage of the component (A) is 60 to 99 parts by weight, preferably 70 to 95 parts by weight, more preferably 75 to 88 parts by weight, and the percentage of the component (B) is 40 to 1 part by weight, preferably 30 to 5 parts by weight, more preferably 25 to 12 parts by weight. The total amount of (A) and (B) is 100 parts by weight in all cases.

If the amount of the component (A) is less than 60 parts by weight, moldability of the composition may be deteriorated, and if it exceeds 99 parts by weight, heat resistance may be deteriorated.

If the amount of the component (B) is less than 1 part by weight, the effect of the component (B) may fall short of imparting the desired electrical properties to the composition, and if the amount exceeds 40 parts by weight, moldability and molding appearance may worsen.

The amount of monomer (b) based on the thermoplastic resin composition of the present invention is usually 0.01 to 5 weight %, preferably 0.1 to 3 weight %, more preferably 0.3 to 1 weight %. When the amount of copolymerized component (b) is within the above range, the compatibility between the components (A) and (B) is good so that the obtained moldings from the thermoplastic resin composition show excellent molding appearance and impact resistance.

In order to further improve electrical properties of the thermoplastic resin composition of the present invention, an organic or inorganic compound capable of acting as an electrolyte may be blended in the composition. The electrolytes used in the present invention are, for instance, those containing an electrically dissociated alkali metal or alkaline earth metal. The amount of the electrolyte blended in the composition is 0.001 to 5 parts by weight based on 100 parts by weight of the composition comprising the component (A) and the component (B). If the amount of the electrolyte is less than 0.001 part by weight, no satisfactory electrical properties improving effect may be obtained, and if its amount exceeds 5 parts by weight, heat stability in the molding operation and molding appearance may be deteriorated.

Examples of the electrolytes usable in the present invention include magnesium stearate, lithium stearate, lithium chloride, calcium chloride, potassium chloride, sodium chloride, lithium bromide and potassium bromide. Lithium chloride is especially preferred. Lithium is particularly effective for improving electrical properties because of the smallest ionic radius. The preferred amount range of the electrolyte to be blended is 10 to 500 ppm calculated as lithium ions in the thermoplastic resin composition. A preferred method of blending lithium chloride in the thermoplastic resin composition of the present invention comprises dissolving lithium chloride in a small quantity of water, blending the solution in a dry blend, and melt kneading it by an extruder.

In the thermoplastic resin composition of the present invention, fillers such as glass fiber, carbon fiber, metallic fiber, glass beads, wollastonite, milled glass fiber, rock fiber, glass flakes, calcium carbonate, calcium silicate, talc, mica, kaolin, barium sulfate, graphite, woodmeal, molybdenum disulfide, magnesium oxide, zinc oxide whisker, potassium titanate whisker, glass balloon, ceramic balloon and the like may be blended, as desired, either singly or as a mixture of two or more of them. Blending of such fillers affords rigidity and high heat deforming temperature to the thermoplastic resin composition of the present invention. Also, by blending of talc, calcium carbonate or the like, a matte effect is imparted to the thermoplastic resin composition of the present invention.

The preferred size (diameter) of glass fiber and carbon fiber used as filler is 6 to 60 μm, and the preferred fiber length is 30 μm or more.

Filler is blended in an amount of preferably 1 to 100 parts by weight, more preferably 5 to 80 parts by weight, based on 100 parts by weight of the total amount of component (A) and component (B) of the thermoplastic resin composition of the present invention.

It is also possible to blend the commonly used additives such as coupling agent, weathering (light stabilizing) agent, antioxidant, plastizer, lubricant, colorant (pigment, dye, etc.), antistatic agent, silicone oil, antibacterial agent, mildewproofing agent, flame retardant and flame retarder assistant in the composition of the present invention.

As weathering agent, for instance, the phosphorus- or sulfur-based organic compounds and the organic compounds containing hydroxyl groups are preferably used. Polyethers and sulfonates having alkyl groups can be used as antistatic agent. These additives are used in an amount of preferably 0.1 to 10 parts by weight, more preferably 0.5 to 5 parts by weight, based on 100 parts by weight of the total amount of component (A) and component (B) combined of the thermoplastic resin composition of the present invention.

In the thermoplastic resin composition of the present invention, it is possible to further blend other kinds of thermoplastic resin and/or thermosetting resins according to the purpose of use of the composition. Exemplary of such additive polymers are polypropylene, polyamides, polyesters, polysulfone, polyether sulfone, polyphenylene sulfide, liquid crystal polymers, vinylidene fluoride, polytetrafluoroethylenne, styrene-vinylidene acetate copolymer, polyamide elastomers, polyamide-imide elastomers, polyester elastomers, polyether ester amides, phenol resins, epoxy resins, novolak resins, and resol resins. These polymers are blended in an amount of preferably 1 to 150 parts by weight, more preferably 5 to 100 parts by weight, based on 100 parts by weight of the total amount of component (A) and component (B) of the thermoplastic resin composition of the present invention.

A flame retardant may be blended to impart flame retardancy to the composition of the present invention. The halogen-based compounds, organic phosphorus-based compounds, nitrogen-based compounds, metal hydroxides, antimony compounds and the like can be used as flame retardant either singly or in combination.

Examples of the halogen-based compounds usable for the above purpose include tetrabromobisphenol A oligomers (which may be capped at the terminal of the molecule with tribromophenol), brominated styrene, after-brominated polystyrene, brominated polycarbonate oligomers, tetrabromobisphenol A, decabromodiphenyl ether, chlorinated polystyrene, and aliphatic chlorine compounds. Of these compounds, tetrabromobisphenol A oligomers (with a molecular weight of about 1,000 to 6,000) are preferred. The bromine concentration of the halogen-based compounds is preferably in the range of 30 to 65% by weight, more preferably 45 to 60% by weight.

Examples of the organic phosphorus-based compounds include triphenyl phosphate, trixylenyl phosphate, tricresylphosphate, trixylenyl thiophosphate, hydroquinonebis(diphenyl phosphate), resorcinolbis(diphenyl phosphate), resorcinolbis(dixylenyl phosphate) and triphenylphosphate oligomers, which may be used either singly or in combination. Of these compounds, triphenyl phosphate, trixylenyl phosphate and resorcinolbis(dixylenyl phosphate) are preferred. The phosphorus concentration in these organic phosphorus-based compounds is preferably in the range of 4 to 30% by weight, more preferably 6 to 25% by weight, and their melting point is preferably in the range of 30 to 160°C.

Examples of the antimony compounds usable as flame retardant in the present invention include antimony trioxide and antimony pentoxide, and examples of the metal hydroxides include magnesium hydroxide and aluminum hydroxide.

Flame retardant is used in an amount of preferably 1 to 50 parts by weight, more preferably 2 to 30 parts by weight, even more preferably 5 to 25 parts by weight, based on 100 parts by weight of the total amount of composition (A) and composition (B). If the amount of the flame retardant blended is less than 1 part by weight, its effect of affording flameretardancy to the composition may be unsatisfactory, and if its amount exceeds 50 parts by weight, the sliding characteristics of the composition may be deteriorated.

The thermoplastic resin composition of the present invention can be obtained by mixing the respective components by a preferable mixing means such as various types of extruder, Banbury mixer, kneader, roll mill and the like. The method using a double-screw extruder is preferred. As for the mixing method of the components, it is possible to use either a collective mixing method or a multiple-stage addition method.

The thermoplastic resin composition of the present invention can be molded into various types of molded product by the various known molding methods such as injection molding, sheet extrusion, vacuum forming, contour extrusion, expansion molding, etc., and the thus obtained molded products, As described above, the thermoplastic resin composition of the present invention is excellent in permanent antistatic properties, impact resistance, moldability and visual appearance of its molded products, can be used as parts of OA machines, domestic and light electric appliances, communication devices, vehicles, etc., and as housing materials, IC cards and the like. They can also be used as building materials such as sills, window frames, railings, etc. Printing or marking can be made on the molded products of the thermoplastic resin composition of the present invention by laser marking or other means. The laser marked material can be used as various types of button, switch, key top, etc., in many fields of commercial products.

EXAMPLES

The present invention is further explained by showing the referential examples, embodying examples and comparative examples, but it should be understood that these examples are merely intended to be illustrative and not to be construed as limiting the scope of the present invention.

In the following Referential Examples, Examples and Comparative Examples, all "parts" and "%" are by weight unless otherwise noted, and the various determinations and evaluations shown in these examples were made according to the following methods.

(1) Average particle size:

Since it has been confirmed electron-microscopically that the particle size of the latex synthesized beforehand in an emulsified state is synonymous with the size of the dispersed particles in the resin, the size of the dispersed particles in the latex was measured by the light scattering method. Measurement was made using a laser particle size analytical system LPA-3100 mfd. by Otsuka Electron Co., Ltd., according to a cumulant method with 70 times of integration. The particle size of the polybutadiene latex used in the examples was 220 nm.

(2) Graft percentage:

Graft percentage was determined using the method described in the text of the present specification.

(3) Intrinsic viscosity [η]:

Each sample (co)polymer was perfectly dissolved in a solvent (methylethylketone) to prepare 5 samples differing in concentration, and the reduced viscosity of each sample was measured at 30°C by an Ubbellohde viscometer to determine intrinsic viscosity [η].

(4) Impact resistance (Izod impact strength):

Measured according to ASTM D-256 using a 1/4" thick notched bar. Unit: J/m.

(5) Fluidity (melt flow rate):

Measured according to ASTM D-1238 at 240°C under a load of 10 kg.

(6) Heat distortion temperature:

Measured according to ASTM D-648 under a load of 18.6 kg/cm$^2$.

(7) Evaluation of visual appearance of molded products:

The thermoplastic resin composition was injection molded using a molding machine IS-80A mfd. by Toshiba Machinery Co., Ltd., and the surface appearance of the plate-liked molded product was visually observed and evaluated according to the following criterion.

   ○: Good appearance. The molded product had a smooth and glossy surface.
   ×: Bad appearance. The surface of the molded product was uneven and had flow marks and/or other flaws.

(8) Combustion test

UL-94 V Test or HB Test was conducted using a 1.6 mm thick test piece.

(9) Antistatic properties

A 2 mm thick 100 mm-diameter disc was injection molded, and after conditioning at 23°C and 50% RH for 7 days, surface resistivity (Q) of the disc was measured by an ultra-insulation resistance meter Model 4329A mfd. by Yokokawa Hewlet Packard, Ltd. In the present invention, it is preferred that the surface resistivity is not more than 9E12 (9X10$^{12}$).

Referential Example 1 (Preparation of component (A))

(1) Preparation of ABS resin (A-1)

To a 7-litre glass-made flask equipped with a stirrer, 100 parts of ion exchange water, 1.5 parts of sodium t-dodecylbenzenesulfonate, 0.1 part of t-dodecylmercaptan, 40 parts of polybutadiene (calcd. as solid), 15 parts of styrene and 5 parts of acrylonitrile were added and heated with stirring. At a point when the temperature reached 45°C, an aqueous solution of an activator comprising 0.1 part of sodium ethylenediaminetetraacetate, 0.003 part of ferrous sulfate, 0.2 part of formaldehyde sodium sulfoxylate dianhydride and 15 parts of ion exchange water, and 0.1 part of diisopropylbenzene hydroperoxide were added and the reaction was continued for one hour.
Thereafter, incremental polymerization materials comprising 50 parts of ion exchange water, one part of sodium t-dodecylbenzenesulfonate, 0.1 part of t-dodecylmercaptan, 0.2 part of diisopropylbenzene hydroperoxide, 30 parts of styrene and 10 parts of acrylonitrile were continuously added over a period of 3 hours to carry on the polymerization reaction. After the completion of the addition, the polymerization mixture was further stirred for one hour, then 0.2 part of 2,2-methylene-bis-(4-ethylene-6-t-butylphenol) was added and the reaction product was taken out of the flask.
The reaction product latex was coagulated with 2 parts of calcium chloride, washed well with water and dried at 75°C for 24 hours to obtain a white powder. Polymerization conversion = 97.5%; graft percentage = 750%; intrinsic viscosity [η ] = 0.44 dl/g.

(2) Preparation of subcomponents (A-2~4)

Emulsion polymerization and solution polymerization were carried out with the formulations shown in Table 1 to prepares the subcomponents (A-2~4). Intrinsic viscosities [η] of the obtained polymers are also shown in Table 1.

Table 1

| | (A-2) AS resin | (A-3) Hydroxyl group-containing resin | (A-4) N-phenyl maleimide-containing resin |
|---|---|---|---|
| Monomers (%) | | | |
| Styrene | 73 | 70 | 35 |
| Acrylonitrile | 27 | 20 | 20 |
| 2-hydroxyethyl methacrylate | - | 10 | - |
| N-phenylmaleimide | - | - | 45 |
| Intrinsic viscosity [η] (dl/g) | 0.50 | 0.40 | 0.40 |

Referential Example 2 (Preparation of component (B) (polyetherester amide)):

(1) Preparation of (B-1)

By ring-opening polymerization of ε-caprolactam, polyamide-6 having a melting point of 200°C was prepared. The amino groups of this polyamide-6 were reacted with a dimer acid (carbon number: 36) to obtain a polyamide which has been carboxy-modified at both ends. 45 parts of this polyamide and 55 parts of polyethylene oxide having a molecular weight of 1,800 were subjected to an esterification reaction to obtain B-1 (η SP/C = 1.7).

(2) Preparation of (B-2)

The same procedure as used in the preparation of (B-1) was conducted except that a polyether with a molecular weight of 1,800, obtained by addition polymerizing ethylene oxide to both ends of bisphenol A, was used in place of polyethyleneoxide to obtain B-2 (η SP/C = 1.8).

(3) Preparation of (B-3)

The amino groups of polyamide-6 with a melting point of 200°C, obtained in the same way as in the preparation of (B-1), were reacted with a dicarboxylic acid (carbon number: 78) obtained by modifying both ends of adipic acid with a dimer acid, and 70 parts of the thus obtained polyamide-6 and 30 parts of polyethylene oxide with a molecular weight of 1,800 were esterified to obtain B-3 (η SP/C = 1.6).

(4) Preparation of (B-4)

In the preparation procedure of (B-1), 95 parts, instead of 45 parts, of the polyamide which has been carboxy-modified at both ends and 5 parts, instead of 55 parts, of polyethyleneoxide having a molecular weight of 1,800 were esterified to obtain B-4 (η SP/C = 1.9).

(5) Preparation of (B-5)

The same procedure as used in the preparation of (B-1) was conducted except that sebacic acid (carbon number = 10) was used instead of dimer acid, to obtain B-5 (η SP/C = 1.7).

Referential Example 3 (Preparation of other thermoplastic resins):

(1) Preparation of polycarbonate

Panelyte L1125 produced by Teijin Chemical Co., Ltd. was used.

(2) Preparation of polytetrafluoroethylene

TF1620 produced by Hoechst AG was used.

Referential Example 4 (Preparation of flame retardant):

(1) Preparation of tetrabromobisphenol A oligomer

A tetrabromobisphenol A oligomer was prepared and the terminal of its molecule was closed with tribromophenol. The obtained oligomer had a bromine concentration of 56% and an average molecular weight of about 2,000.

(2) Preparation of triphenyl phosphate

A commercial product was used.

(3) Preparation of resorcinolbis(dixylenyl phosphate)

A commercial product was used.

Examples 1-5 and Comparative Examples 1-3 (Preparation of thermoplastic resin compositions):

The above-described components (A) and (B), other polymers and additives were mixed by a tumbler in the percentages shown in Table 2, and the mixtures were melt kneaded by a vented double-screw extruder at a cylinder setting temperature of 220-250°C and injection molded to obtain the evaluation test pieces. The results of the above-described evaluations of these test pieces are shown in Table 2.

Examples 1-5 are the thermoplastic resin compositions according to the present invention. It is evident that all resin compositions are excellent in permanent antistatic properties, impact resistance and heat stability in the molding operations.

In Comparative Example 1, the carbon number of the subcomponent (f) of the present invention is outside (78) the range defined in the present invention. The test piece using this composition was bad in electrical properties.

In Comparative Example 2, is the polyamide content in the component (B) of the present invention is above the threshold of the range defined in the present invention. The test piece made by using this composition was poor in electrical properties and also suffered surface exfoliation so that its visual appearance became bad.

In Comparative Example 3, the carbon number of the subcomponent (f) of the present invention is outside (10, lower) the range defined in the present invention. The test piece using this composition was bad in electrical properties and visual appearance.

Table 2

| | Ex. 1 | Ex. 2 | Ex. 3 | Ex. 4 |
|---|---|---|---|---|
| Formulation (parts) | | | | |
| Component (A) | | | | |
| A-1 (ABS resin) | 40 | 40 | 40 | 40 |
| A-2 (AS resin) | 35 | 45 | 15 | 30 |
| A-3 (hydroxyl group-containing resin) | 10 | – | 10 | 10 |
| A-4 (N-phenylmaleimide-containing resin) | – | – | 20 | – |
| Component (B) | | | | |
| B-1 | 15 | – | 15 | 20 |
| B-2 | – | 15 | – | – |
| B-3 | – | – | – | – |
| B-4 | – | – | – | – |
| B-5 | – | – | – | – |
| Additives | | | | |
| Other thermoplastic resin (polycarbonate) | – | – | – | – |
| Polytetrafluoroethylene | – | – | – | – |
| Lithium chloride | – | – | 0.01 | – |
| Flame retardant | | | | |
| Tribromobisphenol A oligomer | – | – | – | 15 |
| Antimony trioxide | – | – | – | 5 |
| Triphenyl phosphate | – | – | – | – |
| Resorcinolbis(dixylenyl phosphate) | – | – | – | – |
| Evaluation results of thermoplastic resin compositions | | | | |
| Izod impact strength (J/m) | 186 | 196 | 108 | 118 |
| Fluidity (melt flow rate) (g/10 min) | 24 | 23 | 15 | 30 |
| Heat distortion temperature (°C) | 95 | 93 | 110 | 92 |
| Appearance of molded product | ○ | ○ | ○ | ○ |
| Flame retardancy | HB | HB | HB | V-0 |
| Surface resistivity (Ω) | 3E10 | 2E11 | 1E10 | 3E11 |

## Table 2 (continued)

|  | Ex. 5 | Comp. Ex. 1 | Comp. Ex. 2 | Comp. Ex. 3 |
|---|---|---|---|---|
| Formulation (parts) | | | | |
| Component (A) | | | | |
| A-1 (ABS resin) | 40 | 40 | 40 | 40 |
| A-2 (AS resin) | 20 | 35 | 45 | 35 |
| A-3 (hydroxyl group-containing resin) | 10 | 10 | - | 10 |
| A-4 (N-phenylmaleimide-containing resin) | - | - | - | - |
| Component (B) | | | | |
| B-1 | 30 | - | - | - |
| B-2 | - | - | - | - |
| B-3 | - | 15 | - | - |
| B-4 | - | - | 15 | - |
| B-5 | - | - | - | 15 |
| Additives | | | | |
| Other thermoplastic resin (polycarbonate) | 140 | - | - | - |
| Polytetrafluoroethylene | 0.1 | - | - | - |
| Lithium chloride | - | - | - | - |
| Flame retardant | | | | |
| Tribromobisphenol A oligomer | - | - | - | - |
| Antimony trioxide | - | - | - | - |
| Triphenyl phosphate | 10 | - | - | - |
| Resorcinolbis(dixylenyl phosphate) | 15 | - | - | - |
| Evaluation results of thermoplastic resin compositions | | | | |
| Izod impact strength (J/m) | 157 | 186 | 186 | 148 |
| Fluidity (melt flow rate) (g/10 min) | 38 | 24 | 20 | 20 |
| Heat distortion temperature (°C) | 92 | 95 | 93 | 93 |
| Appearance of molded product | ○ | ○ | × | × |
| Flame retardancy | V-0 | HB | HB | HB |
| Surface resistivity (Ω) | 2E11 | 3E15 | >E16 | 1E14 |

**Claims**

1. A thermoplastic resin composition comprising:

   (A) 60 to 99 parts by weight of a thermoplastic resin obtainable by polymerizing 0 to 20% by weight of a monomer (b) containing at least one functional group selected from hydroxyl, epoxy, amino, carboxyl, acid anhydride, amide, imide and oxazoline groups, and not less than 10% and less than 100% by weight of at least one monomer (c) selected from aromatic vinyl compounds, vinyl cyanide compounds, acrylic esters, methacrylic esters and maleimide-based compounds, in the presence of more than 0% and not more than 70% by weight of a rubber-like polymer (a), the weight percentage being based on the total weight of (a), (b) and (c); and

(B) 40 to 1 part by weight of a polyether ester amide obtainable by reacting 10 to 90% by weight of a polyamide (d), which is capped at the end of the molecule with a dicarboxylic acid (f) having not less than 21 and less than 60 carbon atoms, with 90 to 10% by weight of polyalkylene oxide (e), the weight percentage being based on the total weight of (d) and (e).

2. A composition according to claim 1, wherein the percentage of monomer (b) is more than 0% and not more than 20% by weight based on the total weight of (a), (b) and (c).

3. A composition according to claim 1, wherein the thermoplastic resin (A) is obtainable by polymerizing not less than 30% and less than 100% by weight of the monomer (c) in the presence of more than 0% and not more than 70% by weight of the rubber-like polymer (a).

4. A composition according to any one of the preceding claims, comprising 70 to 95 parts by weight of the thermoplastic resin (A) and 30 to 5 parts by weight of the polyether ester amide (B).

5. A composition according to any one of the preceding claims, comprising 75 to 88 parts by weight of the thermoplastic resin (A) and 25 to 12 parts by weight of the polyether ester amide (B).

6. A composition according to any one of claims 1, 3, 4 and 5, wherein the thermoplastic resin (A) is at least one resin selected from ABS resins, AES resins, and polymers obtainable by graft polymerizing AS resins to silicone rubber.

7. A composition according to claim 6, wherein the thermoplastic resin (A) is ABS resin or AES resin.

8. A composition according to any one of claims 1 to 5, wherein the component (A) comprises AS resin, copolymer of acrylonitrile-styrene-monomer (b) or a mixture thereof.

9. A composition according to claim 8, wherein said monomer (b) has a hydroxy or imide group.

10. A composition according to claim 8, wherein said monomer (b) is 2-hydroxyethyl methacrylate or N-phenylmaleimide.

11. A composition according to any one of the preceding claims, wherein the carbon number of the dicarboxylic acid (f) is from 25 to 45.

12. A composition according to any one of the preceding claims, wherein the carbon number of the dicarboxylic acid (f) is from 30 to 43.

13. A composition according to any one of the preceding claims, wherein the carbon number of the dicarboxylic acid (f) is from 35 to 40.

14. A moulded article made from a composition as claimed in any one of the preceding claims.

**Patentansprüche**

1. Thermoplastische Harzzusammensetzung, umfassend:

(A) 60 bis 99 Gew.-Teile eines thermoplastischen Harzes, erhältlich durch Polymerisieren von 0 bis 20 Gew.-% eines Monomers (b), das wenigstens eine funktionelle Gruppe enthält, ausgewählt aus Hydroxyl-, Epoxy-, Amino-, Carboxyl-, Säureanhydrid-, Amid-, Imid- und Oxazolin-Gruppen, und von nicht weniger als 10 und weniger als 100 Gew.-% wenigstens eines Monomers (c), ausgewählt aus aromatischen Vinyl-Verbindungen, Vinylcyanid-Verbindungen, Acrylestern, Methacrylestern und Verbindungen auf Maleimid-Basis, in Gegenwart von mehr als 0 und nicht mehr als 70 Gew.-% eines kautschukartigen Polymers (a), wobei der Gewichtsprozentanteil auf dem Gesamtgewicht von (a), (b) und (c) beruht; und

(B) 40 bis 1 Gew.-Teile eines Polyetheresteramids, erhältlich durch Umsetzen von 10 bis 90 Gew.-% eines Polyamids (d), das am Ende des Moleküls mit einer Dicarbonsäure (f) mit nicht weniger als 21 und weniger als 60 Kohlenstoffatomen verkappt ist, mit 90 bis 10 Gew.-% Polyalkylenoxid (e), wobei der Gewichtsprozentanteil auf dem Gesamtgewicht von (d) und (e) beruht.

2. Zusammensetzung gemäß Anspruch 1, worin der Prozentanteil von Monomer (b) mehr als 0 und nicht mehr als 20 Gew.-% auf Basis des Gesamtgewichts von (a), (b) und (c) ist.

3. Zusammensetzung gemäß Anspruch 1, worin das thermoplastische Harz (A) durch Polymerisieren von nicht weniger als 30 und weniger als 100 Gew.-% des Monomers (c) in Gegenwart von mehr als 0 und nicht mehr als 70 Gew.-% des kautschukartigen Polymers (a) erhältlich ist.

4. Zusammensetzung gemäß einem der vorhergehenden Ansprüche, umfassend 70 bis 95 Gew.-Teile des thermoplastischen Harzes (A) und 30 bis 5 Gew.-Teile des Polyetheresteramids (B).

5. Zusammensetzung gemäß einem der vorhergehenden Ansprüche, umfassend 75 bis 88 Gew.-Teile des thermoplastischen Harzes (A) und 25 bis 12 Gew.-Teile des Polyetheresteramids (B).

6. Zusammensetzung gemäß einem der Ansprüche 1, 3, 4 und 5, worin das thermoplastische Harz (A) wenigstens ein Harz ist, ausgewählt aus ABS-Harzen, AES-Harzen und Polymeren, die durch Pfropfpolymerisieren von AS-Harzen an Siliconkautschuk erhältlich sind.

7. Zusammensetzung gemäß Anspruch 6, worin das thermoplastische Harz (A) ABS-Harz oder AES-Harz ist.

8. Zusammensetzung gemäß einem der Ansprüche 1 bis 5, worin die Komponente (A) AES-Harz, Copolymer aus Acrylnitri-Styrol-Monomer (b) oder eine Mischung daraus umfaßt.

9. Zusammensetzung gemäß Anspruch 8, worin das Monomer (b) eine Hydroxy- oder Imid-Gruppe besitzt.

10. Zusammensetzung gemäß Anspruch 8, worin das Monomer (b) 2-Hydroxyethylmethacrylat oder N-Phenylmaleimid ist.

11. Zusammensetzung gemäß einem der vorhergehenden Ansprüche, worin die Kohlenstoffanzahl der Dicarbonsäure (f) 25 bis 45 beträgt.

12. Zusammensetzung gemäß einem der vorhergehenden Ansprüche, worin die Kohlenstoffanzahl der Dicarbonsäure (f) 30 bis 43 beträgt.

13. Zusammensetzung gemäß einem der vorhergehenden Ansprüche, worin die Kohlenstoffanzahl der Dicarbonsäure (f) 35 bis 40 beträgt.

14. Formgegenstand, hergestellt aus einer Zusammensetzung gemäß einem der vorhergehenden Ansprüche.

**Revendications**

1. Composition de résine thermoplastique comprenant : (A) entre 60 et 99 parties en poids d'une résine thermoplastique que l'on peut obtenir par polymérisation de 0 à 20 % en poids d'un monomère (b) contenant au moins un groupe fonctionnel sélectionné parmi les groupes hydroxyle, époxy, aminé, carboxyle, anhydride d'acide, amide, imide et oxazoline, et pas moins de 10 % et moins de 100 % en poids d'au moins un monomère (c) sélectionné parmi les composés vinyliques aromatiques, les composés du cyanure de vinyle, les esters acryliques, les esters méthacryliques et les composés à base de maléimide, en présence de plus de 0 % et pas plus de 70 % en poids d'un polymère similaire au caoutchouc (a), le pourcentage en poids étant basé sur le poids total de (a), (b) et (c) ; et

(B) entre 40 et 1 partie(s) en poids d'un amide ester de polyéther qui peut être obtenu en faisant réagir 10 à 90 % en poids d'un polyamide (d) , qui est coiffé à l'extrémité de la molécule d'un acide dicarboxylique (f) n'ayant pas moins de 21 et moins de 60 atomes de carbone, avec entre 90 et 10 % en poids d'oxyde de polyalkylène (e), le pourcentage en poids étant basé sur le poids total de (d) et (e).

**2.** Composition selon la revendication 1, dans laquelle le pourcentage de monomère (b) est supérieur à 0 % et inférieur à 20 % en poids, la base étant le poids total en (a), (b) et (c).

**3.** Composition selon la revendication 1, dans laquelle la résine thermoplastique (A) peut être obtenue par polymérisation d'au moins 30 % et de moins de 100 % en poids du monomère (c) en présence de plus de 0 % et de pas plus de 70 % en poids du polymère similaire au caoutchouc (a).

**4.** Composition selon l'une quelconque des revendications précédentes, comprenant entre 70 et 95 parties en poids de la résine thermoplastique (A) et entre 30 et 5 parties en poids du polyéther ester amide (B).

**5.** Composition selon l'une quelconque des revendications précédentes, comprenant entre 75 et 88 parties en poids de la résine thermoplastique (A) et entre 25 et 12 parties en poids du polyéther ester amide (B).

**6.** Composition selon l'une quelconque des revendications 1, 3, 4 et 5, dans laquelle la résine thermoplastique (A) est au moins une résine sélectionnée parmi les résines ABS, les résines AES et les polymères qui peuvent être obtenus par polymérisation par greffage de résines AS à du caoutchouc de silicone.

**7.** Composition selon la revendication 6, dans laquelle la résine thermoplastique (A) est une résine ABS ou une résine AES.

**8.** Composition selon l'une quelconque des revendications 1 à 5, dans laquelle le composant (A) comprend une résine AS, un copolymère de monomère acrylonitrile-styrène (b) ou un mélange de ceux-ci.

**9.** Composition selon la revendication 8, dans laquelle ledit monomère (b) contient un groupe hydroxyle ou un groupe imide.

**10.** Composition selon la revendication 8, dans laquelle ledit monomère (b) est le méthacrylate de 2-hydroxyéthyle ou le N-phénylmaléimide.

**11.** Composition selon l'une quelconque des revendications précédentes, dans laquelle le nombre d'atomes de carbone de l'acide dicarboxylique (f) est compris entre 25 et 45.

**12.** Composition selon l'une quelconque des revendications précédentes, dans laquelle le nombre d'atomes de carbone de l'acide dicarboxylique (f) est compris entre 30 et 43.

**13.** Composition selon l'une quelconque des revendications précédentes, dans laquelle le nombre d'atomes de carbone de l'acide dicarboxylique (f) est compris entre 35 et 40.

**14.** Article moulé fabriqué à partir d'une composition telle qu'elle est revendiquée dans l'une quelconque des revendications précédentes.